(19) Europäisches Patentamt
European Patent Office
Office européen des brevets

(11) **EP 4 751 787 A1**

(12) **EUROPEAN PATENT APPLICATION**
published in accordance with Art. 153(4) EPC

(43) Date of publication:
**03.06.2026 Bulletin 2026/23**

(21) Application number: **25738519.5**

(22) Date of filing: **09.01.2025**

(51) International Patent Classification (IPC):
**A63F 13/52** (2014.01)

(52) Cooperative Patent Classification (CPC):
**A63F 13/52**

(86) International application number:
**PCT/CN2025/071560**

(87) International publication number:
**WO 2025/148991 (17.07.2025 Gazette 2025/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.01.2024 CN 202410041697**

(71) Applicant: **Honor Device Co., Ltd.
Shenzhen, Guangdong 518040 (CN)**

(72) Inventor: **SUN, Huisong
Shenzhen, Guangdong 518040 (CN)**

(74) Representative: **Isarpatent
Patent- und Rechtsanwälte Part G mbB
Friedrichstrasse 31
80801 München (DE)**

(54) **FRAME DELIVERY METHOD AND APPARATUS, ELECTRONIC DEVICE, AND READABLE STORAGE MEDIUM**

(57) This application provides a frame sending method and apparatus, an electronic device, and a readable storage medium, and relates to the field of terminals. The frame sending method includes: obtaining a drawing instruction for a first frame image and a drawing instruction for a second frame image, drawing the first frame image in a first buffer based on the drawing instruction for the first frame image, and sending the frame for displaying; drawing the second frame image in the first buffer based on the drawing instruction for the second frame image; and When detecting that a drawing load feature meets a preset condition or detecting a clear instruction for the first buffer, sending a frame sending instruction for the second frame image. The first frame image and the second frame image are sent separately, so that this frame sending process is more consistent with an existing frame sending policy of a GPU. This increases a frequency of the GPU in a timely manner and reduces a processing time for each frame sending task, thereby reducing a waiting time of a buffer needed when the second frame image is sent, and resolving a buffer blocking problem in the frame sending process. Therefore, a frame rate can meet expectations after frame interpolation, and user experience is improved.

FIG. 5A

CONT.
FROM
FIG. 5A

CONT.
FROM
FIG. 5A

CONT.
FROM
FIG. 5A

CONT.
FROM
FIG. 5A

S505

Draw the second frame image in the
first buffer based on the drawing
instruction for the second frame image

S506

Detect whether
a drawing load feature
meets a preset condition or detect a
clear instruction for the
first buffer

No

Yes    S507

Send the second frame image
for displaying

FIG. 5B

## Description

This application claims priority to Chinese Patent Application No. 202410041697.0, filed with the China National Intellectual Property Administration on January 10, 2024 and entitled "FRAME SENDING METHOD AND APPARATUS, ELECTRONIC DEVICE, AND READABLE STORAGE MEDIUM", which is incorporated herein by reference in its entirety.

## TECHNICAL FIELD

This application relates to the field of terminals, and in particular, to a frame sending method and apparatus, an electronic device, and a readable storage medium.

## BACKGROUND

With the rapid development of the gaming industry, an increasing quantity of users present higher requirements for smoothness and a high frame rate of gaming images.

To ensure that a user interface (User Interface, UI) is not warped during frame interpolation, a frame interpolation solution is presented, so that a main image and a UI in a gaming image can be separated, and frame interpolation is performed on only the main image.

However, there is a lack of a frame sending mechanism that matches the frame interpolation solution at present, resulting in buffer blocking in a frame sending process. Consequently, a frame rate of the gaming image cannot reach expectations.

## SUMMARY

This application provides a frame sending method and apparatus, an electronic device, and a readable storage medium. When it is detected that a drawing load feature meets a preset condition or a clear instruction for a first buffer is detected, a frame sending instruction for a second frame image is sent. This can resolve a buffer blocking problem in a frame delivery process after frame interpolation, so that a frame rate can meet expectations after the frame interpolation.

To achieve the foregoing objective, the following technical solutions are used in this application.

According to a first aspect, a frame sending method is provided and applied to an electronic device. The electronic device runs a target program, and the frame sending method includes: obtaining a drawing instruction for a first frame image and a drawing instruction for a second frame image, where one frame of the first frame image and the second frame image is an actual frame of the target program, the other frame of the first frame image and the second frame image is a prediction frame, and the prediction frame is obtained through prediction based on the actual frame and a frame preceding the actual frame; drawing the first frame image in a first buffer based on the drawing instruction for the first frame image, and sending the frame for displaying; drawing the second frame image in the first buffer based on the drawing instruction for the second frame image; and when detecting that a drawing load feature meets a preset condition or detecting a clear instruction for the first buffer, sending a frame sending instruction for the second frame image.

In embodiments of this application, the frame sending method may be applied to an electronic device, including a mobile phone, a tablet computer, a handheld game console, a wearable device, an augmented reality/virtual reality device, a notebook computer, an ultra-mobile personal computer, a netbook, a personal digital assistant, and the like.

In the first aspect, a frame sending occasion of the second frame image is determined by detecting whether the drawing load feature meets the preset condition or detecting the clear instruction for the first buffer. This reduces a processing time for each frame sending task, thereby reducing a waiting time of a buffer needed when the second frame image is sent, and resolving a buffer blocking problem in the frame sending process. Therefore, a frame rate can meet expectations after frame interpolation, and user experience is improved.

In some possible implementations, the drawing load feature is a quantity of rendering instructions DrawCalls executed when the second frame image is drawn in the first buffer.

The detecting that the drawing load feature meets a preset condition includes: when the quantity of executed DrawCalls is greater than or equal to a first preset threshold, determining that the drawing load feature meets the preset condition.

In some possible implementations, a total quantity of DrawCalls for drawing one frame image of the target program is N, and N is a positive integer. The first preset threshold is any integer between N/3 and N/2.

In some possible implementations, when the clear instruction for the first buffer is detected, the frame sending method further includes: obtaining a frame sending time, where the frame sending time is duration between a time point at which the first frame image is sent for displaying and a time point at which the clear instruction for the first buffer is detected; and when the frame sending time is less than first preset duration, sending a frequency increase instruction to a graphics processing unit, where the frequency increase instruction is used to indicate the graphics processing unit to increase an operating frequency from an original frequency to a target frequency.

In some possible implementations, the frame sending method further includes: sending a recovery instruction to the graphics processing unit after second preset duration, where the recovery instruction is used to indicate the graphics processing unit to recover the operating frequency from the target frequency to the original frequency.

In some possible implementations, a target frame rate of the target program is M, and M is a positive number. The second preset duration is 1/2M seconds.

In some possible implementations, the first preset duration is one-third of the second preset duration.

According to a second aspect, a frame sending apparatus is provided and applied to an electronic device. The electronic device runs a target program, and the apparatus includes:

an obtaining module, configured to obtain a drawing instruction for a first frame image and a drawing instruction for a second frame image, where one frame of the first frame image and the second frame image is an actual frame of the target program, the other frame of the first frame image and the second frame image is a prediction frame, and the prediction frame is obtained through prediction based on the actual frame and a frame preceding the actual frame; and a frame sending module, configured to: draw the first frame image in a first buffer based on the drawing instruction for the first frame image, and send the frame for displaying. The frame sending module is further configured to: draw the second frame image in the first buffer based on the drawing instruction for the second frame image; and when it is detected that a drawing load feature meets a preset condition or a clear instruction for the first buffer is detected, send the second frame image for displaying.

In some possible implementations, the drawing load feature is a quantity of rendering instructions Draw-Calls executed when the second frame image is drawn in the first buffer.

The frame sending module is further configured to: when the quantity of executed DrawCalls is greater than or equal to a first preset threshold, determine that the drawing load feature meets the preset condition.

In some possible implementations, a total quantity of DrawCalls for drawing one frame image of the target program is N, and N is a positive integer. The first preset threshold is any integer between N/3 and N/2.

In some possible implementations, the frame sending module is further configured to: obtain a frame sending time, where the frame sending time is duration between a time point at which the first frame image is sent for displaying and a time point at which the clear instruction for the first buffer is detected; and when the frame sending time is less than first preset duration, send a frequency increase instruction to a graphics processing unit, where the frequency increase instruction is used to indicate the graphics processing unit to increase an operating frequency from an original frequency to a target frequency.

In some possible implementations, the frame sending module is configured to send a recovery instruction to the graphics processing unit after second preset duration, where the recovery instruction is used to indicate the graphics processing unit to recover the operating frequency from the target frequency to the original frequency.

In some possible implementations, a target frame rate of the target program is M, and M is a positive number. The second preset duration is 1/2M seconds.

In some possible implementations, the first preset duration is one-third of the second preset duration.

According to a third aspect, an electronic device is provided, including a memory, a processor, and a computer program that is stored in the memory and that is capable of running on the processor. When the processor executes the computer program, the method according to the first aspect can be performed.

According to a fourth aspect, a chip is provided. The chip includes a processor, configured to invoke and run a computer program from a memory, so that a device installed with the chip performs the method according to the first aspect.

According to a fifth aspect, a computer-readable storage medium is provided, where the computer-readable storage medium stores a computer program, the computer program includes a program instruction, and when being executed by a processor, the processor is enabled to perform the method according to the first aspect.

According to a sixth aspect, a computer program product is provided. The computer program product includes computer program code. When the computer program code is run by an electronic device, the electronic device is enabled to perform the method according to the first aspect.

For beneficial effects of the second aspect to the sixth aspect, reference may be made to the first aspect. Details are not described herein again.

## BRIEF DESCRIPTION OF THE DRAWING

FIG. 1 is a schematic diagram of an application scenario of a frame sending method according to an embodiment of this application;

FIG. 2 is a block diagram of a hardware structure of an electronic device according to an embodiment of this application;

FIG. 3 is a block diagram of a system structure of an electronic device according to an embodiment of this application;

FIG. 4 is a block diagram of a software structure of an electronic device according to an embodiment of this application;

FIG. 5A and FIG. 5B are a schematic flowchart of a frame sending method according to an embodiment of this application;

FIG. 6 is a schematic flowchart of an implementation of a step S506 of a frame sending method according to an embodiment of this application;

FIG. 7A and FIG. 7B are a schematic flowchart of another frame sending method according to an embodiment of this application;

FIG. 8 is a block diagram of a structure of a frame sending apparatus according to an embodiment of this application; and

FIG. 9 is a schematic diagram of a structure of a chip according to an embodiment of this application.

## DETAILED DESCRIPTION OF EMBODIMENTS

The following describes technical solutions in this application with reference to the accompanying drawings.

In descriptions in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

Hereinafter, the terms "first" and "second" are for descriptive purposes only and are not to be construed as indicating or implying their relative importance or implicitly specifying the number of indicated technical features. Therefore, a feature defined with "first" or "second" may explicitly or implicitly include one or more such features. In descriptions of embodiments, unless otherwise stated, "a plurality of" means two or more.

With the development of technologies, mobile electronic devices such as a mobile phone and a tablet computer can support refresh rates such as 90 Hz, 120 Hz, and even 140 Hz. This means that higher requirements are presented for smoothness and a frame rate of a gaming image when a gaming application runs on the electronic devices.

However, due to performance limitations of a device used by a user, when a gaming application runs, a frame rate of an output gaming image may be difficult to reach a screen refresh rate, leading to problems such as frame loss and freezes. In this case, frame interpolation may be performed on the gaming image through a frame interpolation technology. This effectively eliminates the frame loss and freezes, increases frames of the gaming image, and improves smoothness of a game.

Currently, a universal frame interpolation solution is presented. In this solution, a main scenario and a user interface (User Interface, UI) in the gaming image can be separated, thereby separately performing frame interpolation for the main scenario. This resolves warping of the UI caused by predicting, through a conventional frame interpolation method, the UI with the main scenario.

However, after frame interpolation in this solution, an actual frame and a prediction frame are sent together. In this case, some brands of graphics processing units (graphics processing unit, GPU) are not configured with corresponding frame sending policies. Consequently, a frequency cannot be increased in a timely manner when a frame sending task is processed. As a result, an operating frequency of a GPU is low, and buffer (buffer) blocking occurs.

In view of this, this application provides a frame sending method, which is applied to an electronic device. The electronic device runs a target program, and the frame sending method includes: obtaining a drawing instruction for a first frame image and a drawing instruction for a second frame image, where one frame of the first frame image and the second frame image is an actual frame of the target program, the other frame of the first frame image and the second frame image is a prediction frame, and the prediction frame is obtained through prediction based on the actual frame and a frame preceding the actual frame; drawing the first frame image in a first buffer based on the drawing instruction for the first frame image, and sending the frame for displaying; drawing the second frame image in the first buffer based on the drawing instruction for the second frame image; and when detecting that a drawing load feature meets a preset condition or detecting a clear instruction for the first buffer, sending a frame sending instruction for the second frame image.

In this application, the first frame image is immediately sent for displaying after being drawn, and then a frame sending occasion of the second frame image is detected by detecting whether the drawing load feature meets the preset condition or detecting the clear instruction for the first buffer. The first frame image and the second frame image are sent separately, so that this frame sending process is more consistent with an existing frame sending policy of a GPU. This increases a frequency of the GPU in a timely manner and reduces a processing time for each frame sending task, thereby reducing a waiting time of a buffer needed when the second frame image is sent, and resolving a buffer blocking problem in the frame sending process. Therefore, a frame rate can meet expectations after frame interpolation, and user experience is improved.

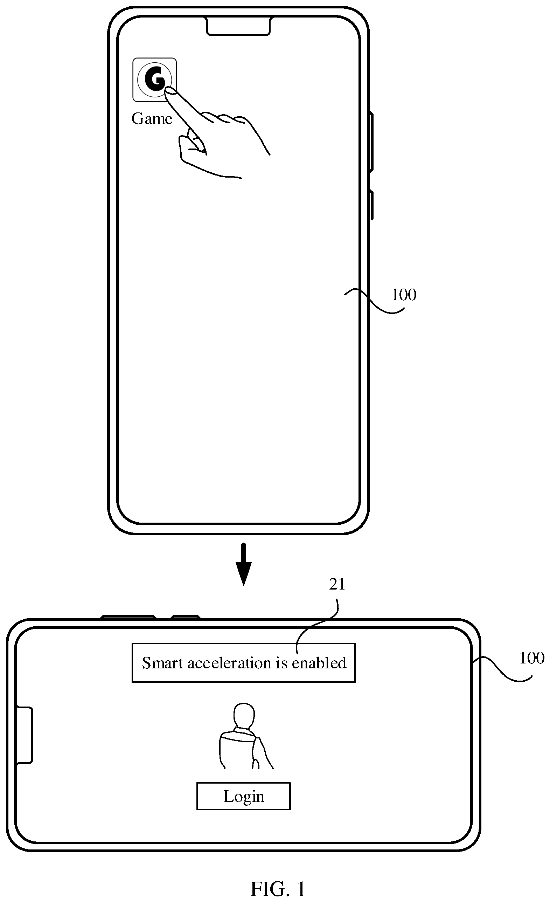

FIG. 1 is a schematic diagram of an application scenario of a frame sending method according to an embodiment of this application.

Refer to FIG. 1. Firstly, the application scenario according to this embodiment of this application is briefly described.

FIG. 1 shows an electronic device 100. When receiving an operation indicating the start of a gaming application, the electronic device 100 starts the gaming application in response to this operation.

When starting the gaming application, the electronic device 100 may enable a frame interpolation function based on a pre-enabled game acceleration function. The frame interpolation function may be automatically enabled or disabled based on factors such as performance of the electronic device 100, a screen refresh rate, and rendering difficulty of the gaming application, or enabled or disabled in response to a user operation. In practical application, the frame interpolation function may be referred to as "image enhancement", "smart acceleration", or "smart optimization".

After the frame interpolation function is enabled, prompt information may be displayed in a floating window 21 in an interface of the gaming application, to indicate that smart acceleration is enabled. Alternatively, a switch of the frame interpolation function may be further displayed in a floating window 21.

In this case, after the start of UI rendering is detected, through the frame interpolation function, a main interface rendering instruction and a UI rendering instruction for the gaming application are intercepted, and then the main interface and a UI of the gaming application are separately rendered in different frame buffers.

Then, frame interpolation processing is performed based on two consecutive actual frames of the main interface of the gaming application, to obtain a prediction frame of the main interface.

Finally, the prediction frame of the main interface is composited with the UI, to obtain a prediction frame of the gaming interface, and through the frame sending method, the prediction frame and the actual frame are sent for displaying.

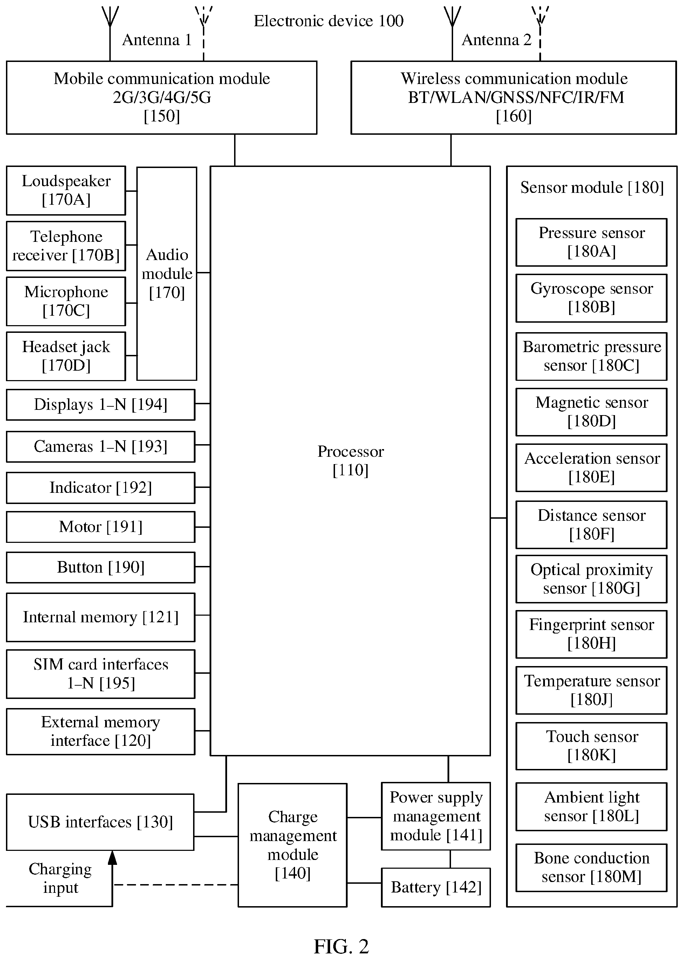

FIG. 2 is a block diagram of a hardware structure of an electronic device according to an embodiment of this application.

As an example, the electronic device may include a mobile phone, a tablet computer, a handheld game console, a wearable device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), and the like. A specific type of the electronic device is not limited in embodiments of this application.

Refer to FIG. 2. The electronic device 100 may include a processor 110, an external memory interface 120, an internal memory 121, a universal serial bus (universal serial bus, USB) interface 130, a charge management module 140, a power management module 141, a battery 142, an antenna 1, an antenna 2, a mobile communication module 150, a wireless communication module 160, an audio module 170, a speaker 170A, a telephone receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, some components may be combined, some components may be split, or different component arrangements may be used. The components in the figure may be implemented by hardware, software, or a combination of software and hardware.

As an example, when the electronic device 100 is a mobile phone or a tablet computer, the electronic device may include all components in the figure, or may include only some components in the figure.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be separate devices, or may be integrated into one or more processors.

The controller may generate an operation control signal according to instruction operation code and a timing signal, and control obtaining and executing of instructions.

A memory may be further disposed in the processor 110, and is configured to store an instruction and data. In some embodiments, the storage of the processor 110 is a cache. The memory may store instructions or data recently used or cyclically used by the processor 110. If the processor 110 needs to use the instructions or the data again, the processor 110 may directly invoke the instructions or the data from the memory. This avoids repeated access, and reduces a waiting time of the processor 110, so that system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

It may be understood that the interface connection relationship between the modules shown in this embodiment of this application is merely an example, and does not constitute a limitation on the structure of the electronic device 100. In some other embodiments of this application, the electronic device 100 may alternatively use an interface connection manner different from that in the foregoing embodiment, or use a combination of a plurality of the interface connection manners.

The charge management module 140 is configured to receive charging input from a charger.

The power management module 141 is configured to connect to the battery 142, the charge management module 140, and the processor 110. The power management module 141 receives an input from the battery 142 and/or an input from the charge management module 140, and supplies power to the processor 110, the internal memory 121, the display 194, the camera 193, the wireless communication module 160, and the like.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover a single communication frequency band or a plurality of communication frequency bands. Different antennas may be further multiplexed, to improve antenna utilization.

The mobile communication module 150 may provide a solution for wireless communication, including 2G/3G/4G/5G and the like, that is applied to the electronic device 100.

The wireless communication module 160 may provide a solution to wireless communication applied to the electronic device 100 and including wireless local area networks (wireless local area networks, WLAN) (such as wireless fidelity (wireless fidelity, Wi-Fi)), Bluetooth (bluetooth, BT), a global navigation satellite system (global navigation satellite system, GNSS), frequency modulation (frequency modulation, FM), near field communication (near field communication, NFC), and an infrared (infrared, IR) technology.

In some embodiments, in the electronic device 100, the antenna 1 is coupled to the mobile communication module 150, and the antenna 2 is coupled to the wireless communication module 160, so that the electronic device 100 can communicate with a network and another device through a wireless communication technology.

The electronic device 100 implements a display function by using the GPU, the display 194, the application processor, and the like. The GPU is a microprocessor for image processing, and connects the display 194 and the application processor. The GPU is configured to perform mathematical and geometric computation, and render an image. The processor 110 may include one or more GPUs that perform program instructions to generate or change display information.

The display 194 is configured to display an image, a video, or the like. The display 194 may include a display panel. The display panel may use a liquid crystal display (liquid crystal display, LCD), an organic light-emitting diode (organic light-emitting diode, OLED), an active-matrix organic light emitting diode (active-matrix organic light emitting diode, AMOLED), a flex light-emitting diode (flex light-emitting diode, FLED), a mini-LED, a micro-LED, a micro-OLED, quantum dot light emitting diodes (quantum dot light emitting diodes, QLED), or the like.

The electronic device 100 may implement a photographing function by using the ISP, the camera 193, the video encoder and decoder, the GPU, the display 194, the application processor, and the like. The ISP is configured to handle data returned by the camera 193. In some embodiments, the ISP may be provided in the camera 193. The camera 193 is configured to capture a still picture or a video.

The external memory interface 120 may be configured to be connected to an external storage card, for example, a Micro SD card, to expand a storage capability of the electronic device 100. The external storage card communicates with the processor 110 via the external memory interface 120, to implement a data storage function.

The internal memory 121 may be configured to store a computer-executable program code, and the computer-executable program code includes instructions. The internal memory 121 may include a program storage region and a data storage region.

The electronic device 100 may implement an audio function by using the audio module 170, the speaker 170A, the telephone receiver 170B, the microphone 170C, the headset jack 170D, the application processor, and the like. The audio function includes, for example, music playing and sound recording.

The audio module 170 is configured to convert digital audio information into an analog audio signal for output, and is also configured to convert analog audio input into a digital audio signal. The audio module 170 may further be configured to encode and decode an audio signal.

The speaker 170A, also referred to as a "loudspeaker", is configured to convert an audio electrical signal into a sound signal. The electronic device 100 may listen to the music or answer a hands-free call by using the loudspeaker 170A.

The telephone receiver 170B, also referred to as an "earpiece", is configured to convert an audio electrical audio signal into a sound signal. When the electronic device 100 answers a telephone call or a voice message, the telephone receiver 170B may be placed near a person's ear to answer the voice.

The microphone 170C, also referred to as a "mike" or a "mic", is configured to convert a sound signal into an electrical signal.

The headset jack 170D is configured to connect to a wired headset.

The pressure sensor 180A is configured to sense a pressure signal, and may convert the pressure signal into an electrical signal.

The gyroscope sensor 180B may be configured to determine a motion posture of the electronic device 100. The gyroscope sensor 180B may further be used in navigation and a motion sensing game scenario.

The barometric pressure sensor 180C is configured to measure barometric pressure. In some embodiments, the electronic device 100 calculates an altitude by using a barometric pressure value measured by the barometric pressure sensor 180C, to assist in positioning and navigation.

The magnetic sensor 180D includes a Hall sensor. The electronic device 100 may detect opening/-closing of a flip leather case by using the magnetic sensor 180D.

The acceleration sensor 180E may detect magnitudes of acceleration of the electronic device 100 in all directions (generally on three axes), may detect a magnitude and a direction of gravity when the electronic device 100 is still, may be further configured to identify a posture of the electronic device, and is applied to applications such as switching between a landscape mode and a portrait mode and a pedometer.

The distance sensor 180F is configured to measure a distance. The electronic device 100 may measure a distance in an infrared manner or a laser manner.

The optical proximity sensor 180G may include, for example, a light-emitting diode (LED) and an optical detector such as a photodiode. The light-emitting diode may be an infrared light-emitting diode. The electronic device 100 emits infrared light to the outside by using the light-emitting diode. The electronic device 100 uses the photodiode to detect infrared reflected light from a nearby object. When sufficient reflected light is detected, it may be determined that there is an object near the electronic device 100. When insufficient reflected light is detected, the electronic device 100 may determine that there exists no object near the electronic device 100.

The ambient light sensor 180L is configured to sense ambient light luminance.

The fingerprint sensor 180H is configured to collect a fingerprint. The electronic device 100 may implement fingerprint-based unlocking, application lock accessing, fingerprint-based photographing, fingerprint-based call answering, and the like by using a feature of the collected fingerprint.

The temperature sensor 180J is configured to detect a temperature. In some embodiments, the electronic device 100 executes a temperature processing policy based on the temperature detected by the temperature sensor 180J.

The touch sensor 180K is also referred to as a "touch control device". The touch sensor 180K may be disposed on the display 194, and the touch sensor 180K and the display 194 form a touchscreen, which is also referred to as a "touch control screen". The touch sensor 180K is configured to detect a touch operation performed on or near the touch sensor 180K.

The button 190 includes a power button, a volume button, or the like. The button 190 may be a mechanical button, or a touch-type button.

The motor 191 may generate a vibrating alert.

The indicator 192 may be an indicator light that may be configured to indicate a charging state and a power change, or may further be configured to indicate a message, a missed call, a notification, and the like.

The SIM card interface 195 is configured to connect to an SIM card.

For the scenario in the foregoing example, the operating system of the electronic device 100 includes but is not limited to Symbian (Symbian), Android (Andriod), Windows (Windows), Apple (MacOS or iOS), Blackberry (Blackberry), HarmonyOS (HarmonyOS), Linux (Linux), Unix (Unix), or the like.

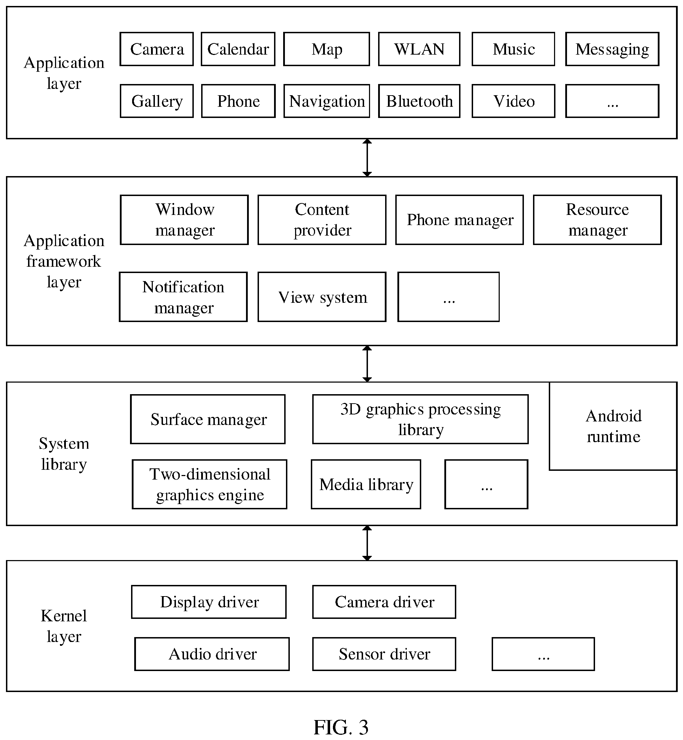

FIG. 3 is a block diagram of a system structure of an electronic device according to an embodiment of this application.

For example, when the frame sending method provided in this application is applied on the electronic device 100, an operating system of the electronic device 100 may be Android. For a system structure of Andriod, refer to FIG. 3.

In a layered architecture, software is divided into several layers, and each layer has a clear role and task. The layers communicate with each other by using a software interface. In some embodiments, the Android system is divided into four layers, which are an application layer, an application framework layer, an android runtime (Android runtime) and system library, and a kernel layer from top to bottom.

The application layer may include a series of application packages.

As shown in FIG. 3, the application packages may include applications such as a camera, a gallery, a calendar, a call, a map, navigation, WLAN, Bluetooth, music, video, and SMS messages.

The application framework layer provides an application programming interface (application programming interface, API) and a programming framework for an application at the application layer. The application framework layer includes some predefined functions.

As shown in FIG. 3, the application program framework layer may include a window manager, a content provider, a view system, a phone manager, a resource manager, a notification manager, and the like.

The window manager is configured to manage a window application. The window manager may acquire a size of a display, determine whether there is a state bar, lock a screen, take a screenshot, and the like.

The content provider is configured to store and obtain data and make the data accessible to an application. The data may include a video, an image, an audio, calls that are made and answered, a browsing history, a bookmark, a phonebook, and the like.

The view system includes a visual control such as a control for displaying a character or a control for displaying a picture. The view system may be configured to construct an application. A display interface may include one or more views. For example, a display interface including an SMS message notification icon may include a view for displaying a character or a view for displaying a picture.

The phone manager is configured to provide a communication function for the electronic device, for example, call status management (including connecting, hanging-up, and the like).

The resource manager provides various resources for an application, such as a localized character string, an icon, an image, a layout file, and a video file.

The notification manager enables an application to display notification information in the status bar that may be used to convey a message of a notification type, where the message may disappear automatically after a short stay without user interaction. For example, the notification manager is configured to provide a notification of download completion, a message notification, and the like. The notification manager may alternatively be a notification that appears in a top status bar of a system in a form of a graph or scroll bar text, for example, a notification of an application running in the background, or a notification that appears on a screen in a form of a dialog window. For example, text information appears in the state bar for prompt, a prompt tone is made, the electronic device vibrates, or an indicator light flashes.

Android Runtime includes a kernel library and a virtual machine. The Android runtime is responsible for scheduling and managing the Android system.

The core library includes two parts: a function that needs to be invoked by using the Java language, and a core library of Android.

The application layer and the application framework layer are run in the virtual machine. The virtual machine executes java files at the application layer and the application framework layer as binary files. The virtual machine is configured to perform functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a 2D graphics engine (for example, an SGL).

The surface manager is configured to manage a display subsystem, and provide fusion of 2D and 3D layers to a plurality of applications.

The media library supports playback and recording in a plurality of commonly used audio and video formats, a still image file, and the like. The media library may support a plurality of audio and video encoding formats, such as MPEG4, H.264, MP3, AAC, AMR, JPG, PNG, and the like.

The three-dimensional graphics processing library is configured to implement three-dimensional graphics drawing, image rendering, compositing, layer processing, and the like.

The 2D graphics engine is a drawing engine for 2D drawing.

The kernel layer is a layer between hardware and software. The kernel layer includes at least a display driver, a camera driver, an audio driver and a sensor driver.

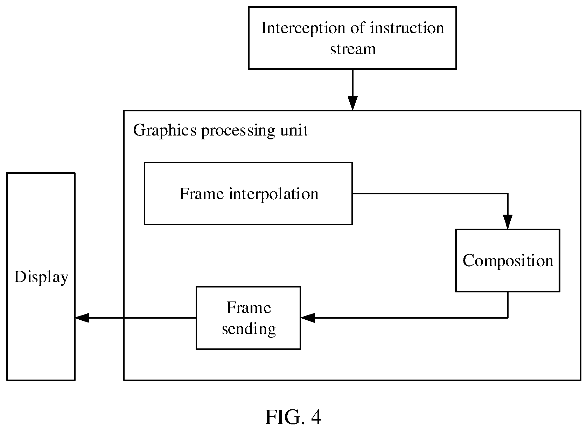

FIG. 4 is a block diagram of a software structure of an electronic device according to an embodiment of this application.

Refer to FIG. 4, the software structure of the electronic device includes modules such as an instruction stream interception module, a frame interpolation module, a compositing module, a smart frame sending module, a display module, and the like.

Refer to FIG. 3, the instruction stream interception module may be deployed in a system library, to intercept a rendering instruction sent by a target program to a GPU.

The frame interpolation module, the compositing module, and the smart frame sending module may be deployed in the GPU. The frame interpolation module is configured to perform frame interpolation on the main image. The compositing module is configured to composite, with the UI, the main image on which frame interpolation is performed. The smart frame sending module is configured to: perform the frame sending method provided in this application, and transmit the composited image to the display module at an appropriate time.

The display module may be deployed in a kernel layer, and configured to send a received image to a screen for displaying.

It may be clearly understood by a person skilled in the art that, for the purpose of convenient and brief description, only division of the foregoing functional units or modules is used as examples for illustration. In actual application, the foregoing functions can be allocated to and completed by different functional units or modules according to a requirement. That is, an internal structure of the apparatus is divided into different functional units or modules to implement all or some of the functions described above.

The functional units/modules in the embodiments may be integrated into one processing unit, or each of the units may exist alone physically, or two or more units are integrated into one unit. The above integrated unit may be implemented either in a form of hardware or in a form of a software functional unit. For example, the "module" may be a software program, a hardware circuit, or a combination of the two that implement the above functions. The hardware circuit may include an application specific integrated circuit (application specific integrated circuit, ASIC), an electronic circuit, a processor (for example, a shared processor, a dedicated processor, or a packet processor) configured to execute one or more software or firmware programs and a memory, a combined logic circuit, and/or another appropriate component that supports the described functions.

Therefore, the modules of each example described in embodiments of this application can be implemented by electronic hardware, or a combination of computer software and electronic hardware. Whether the functions are executed in a mode of hardware or software depends on particular applications and design constraint conditions of the technical solutions. A person skilled in the art may use different methods to implement the described functions for each specific application, but such implementation should not be considered to be beyond the scope of this application.

Moreover, specific names of the function units and modules are also only for the convenience of distinguishing from each other, but are not intended to limit the protection scope of this application. For a specific working process of the foregoing units and modules, refer to a corresponding process in the following method embodiments. Details are not described herein again.

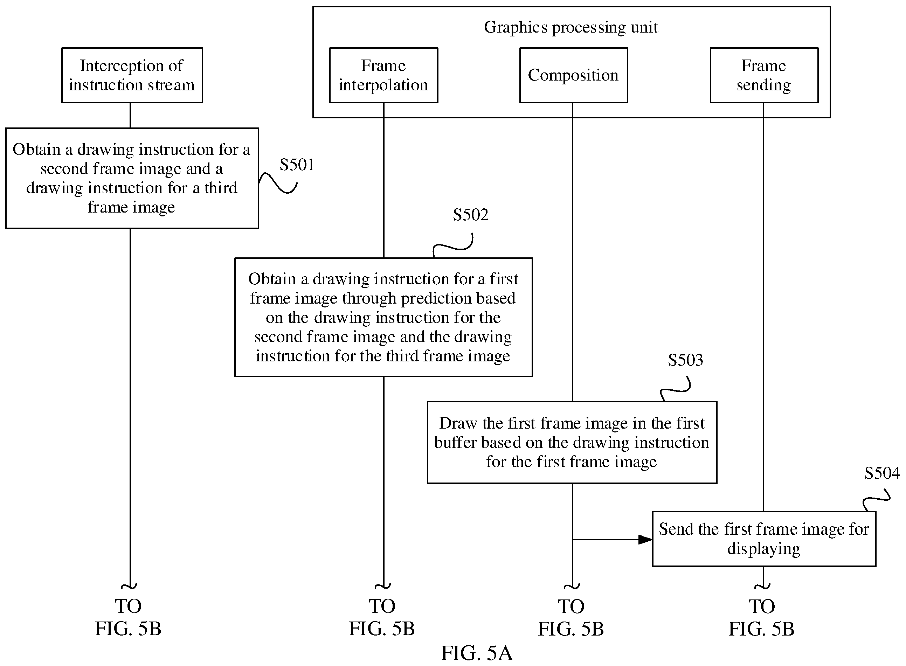

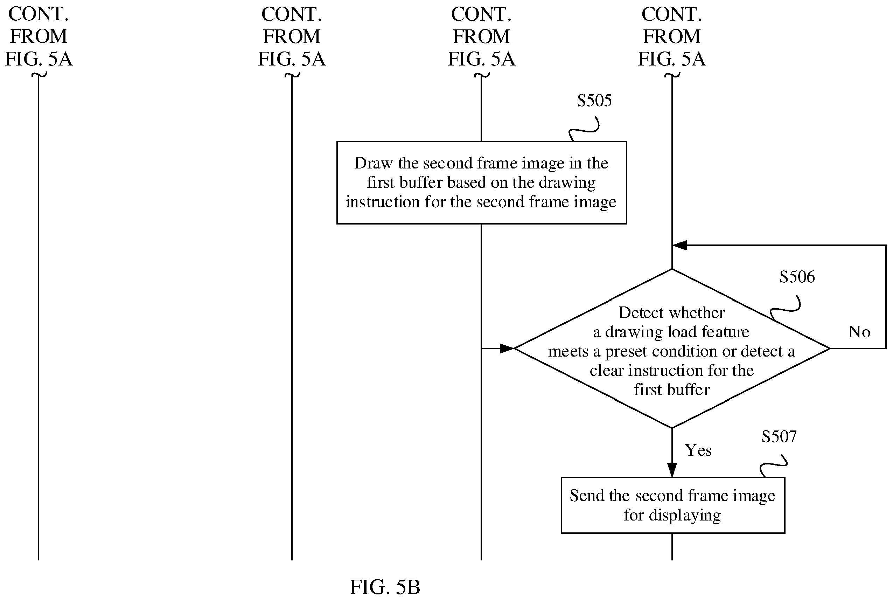

FIG. 5A and FIG. 5B are a schematic flowchart of a frame sending method according to an embodiment of this application.

In some possible implementations, frame interpolation needs to be performed on an actual frame of a target program through a frame interpolation algorithm before frame sending. For example, two consecutive actual frames of the target program are intercepted based on an instruction stream, and separated from a UI. Main images of the two actual frames that are obtained after separation are input into a frame interpolation algorithm for frame interpolation processing, to obtain a main image of a prediction frame. The main image of the prediction frame is composited with the separated UI, to obtain the prediction frame.

Frame interpolation includes interframe interpolation and extraframe extrapolation. The interframe interpolation is to interpolate a prediction frame between two actual frames, while the extraframe extrapolation is to interpolate a prediction frame after two actual frames. Therefore, the frame interpolation algorithm also includes an interframe interpolation algorithm and an extraframe extrapolation algorithm. Common interframe interpolation algorithms include a motion estimate and motion compensation (Motion Estimate and Motion Compensation, EMEC) algorithm, an optical flow algorithm, a frame interpolation algorithm based on deep learning, a frame interpolation algorithm based on linear predictive coding (Linear Predictive Coding, LPC). Common extraframe interpolation algorithms include an alignment extraframe extrapolation algorithm based on a recurrent neural network, an extraframe extrapolation algorithm based on a long short-term memory network, and the like.

Refer to FIG. 5A and FIG. 5B. An example in which a frame interpolation method is the interframe interpolation is used. That is, a first frame image is the prediction frame, and a second frame image is the actual frame of the target program. A frame sending method includes the following steps.

S501: Obtain a drawing instruction for a second frame image and a drawing instruction for a third frame image.

In some possible implementations, a third frame image ($F_{t-2}$) is a frame image preceding a second frame image ($F_t$), and the second frame image and the third frame image are both actual frames.

In this embodiment, the drawing instruction may include a list of elements that need to be rendered, and a plurality of DrawCalls pointing to the list of the elements. One frame image may be obtained after the DrawCalls pointing to the list of the elements are performed.

As an example, when the second frame image and the third frame image are obtained, a DrawCall instruction in a memory may be first intercepted. When the intercepted DrawCall instruction meets a preset feature, it is determined to start separation from a UI. During the separation from the UI, two frame buffers (frame buffer, FB) may be created, namely, a second frame buffer and a third frame buffer. Drawing instructions for main images of actual frames are sequentially written to the second frame buffer, and drawing instructions for UIs of the actual frames are sequentially written to the third frame buffer.

In some possible implementations, the drawing instruction for the second frame image includes a drawing instruction for a main image of the second frame image in the second buffer, and a drawing instruction for a UI of the second frame image in the third frame buffer. The drawing instruction for the third frame image includes a drawing instruction for a main image of the third frame image in the second buffer, and a drawing instruction for a UI of the third frame image in the third frame buffer.

S502: Obtain a drawing instruction for a first frame image through prediction based on the drawing instruction for the second frame image and the drawing instruction for the third frame image.

In some possible implementations, during interframe interpolation, a first frame image ($F_{t-1}$) is an intermediate frame between the second frame image and the third frame image. A drawing instruction for a main image of the first frame image may be obtained by inputting the main image of the second frame image and the main image of the third frame image into an EMEC algorithm for prediction. The drawing instruction for the main image of the first frame image may be stored in the second frame buffer.

In some possible implementations, because the UI generally does not change during frame interpolation, the drawing instruction for the UI of the second frame image may be used as a drawing instruction for a UI of the first frame image. Therefore, the drawing instruction for the first frame image includes the drawing instruction for the main image of the first frame image in the second frame buffer, and the drawing instruction for the UI of the second frame image in the third frame buffer.

S503: Draw the first frame image in a first buffer based on the drawing instruction for the first frame image.

S504: Send the first frame image for displaying.

S505: Draw the second frame image in the first buffer based on the drawing instruction for the second frame image.

In some possible implementations, S503, S504, and S505 are performed consecutively through a section of code, and described together here.

As an example, during frame sending, after a third frame image ($F_{t-2}$) is sent, the first frame image ($F_{t-1}$) and the second frame image (Ft) may be sent sequentially.

Generally, before frame sending, an image may be drawn in a first frame buffer (FB0), and a frame sending operation is performed after the drawing is completed.

However, in this application, after frame interpolation, the first frame image ($F_{t-1}$) and the second frame image (Ft) need to be sent continuously. If the drawing instruction and a frame sending instruction for the first frame image ($F_{t-1}$) and the drawing instruction and a frame sending instruction for the second frame image (Ft) are submitted to a GPU simultaneously, based on an existing frame sending policy of the GPU, the GPU cannot accurately determine a load and cannot increase a frequency in a timely manner. As a result, a rendering speed for each frame image is slow, and buffer blocking occurs.

Therefore, a frame sending time of the first frame image ($F_{t-1}$) and a frame sending time of the second frame image (Ft) needs to be adjusted. If the frame sending time of the first frame image ($F_{t-1}$) and the frame sending time of the second frame image ($F_t$) are staggered, the GPU can accurately recognize complexity and increase the frequency in a timely manner.

In some possible implementations, the first frame image ($F_{t-1}$) may be first composited in FB0 and sent, and then the second frame image ($F_t$) is composited in FB0. When the second frame image (Ft) is composited, a frame sending operation for FB0 is not performed temporarily.

As an example, this application provides, by using an example of open graphics library (Open Graphics Library, OpenGL) code, an example of drawing the first frame image in the first buffer (FB0). The example of the code is as follows:

```
glBindFramebuffer(GL_DRAW_FRAMEBUFFER, 0);
glViewport(0, 0, width, height);
glScissor(0, 0, width, height);
DrawTexture(interpolationMainTexture, false);
```

DrawTexture(uiTexture, true); where glBindFramebuffer(GL_DRAW_FRAMEBUFFER, 0) is used to buffer and bind a current drawn frame buffer to a default frame buffer FB0.

glViewport(0, 0, width, height) is used to set a view port (viewport). The view port may be a rectangular area, width is a width of the view port, and height is a height of the view port. OpenGL maps a rendering result to the area.

glScissor(0, 0, width, height) is used to set a cropping window. The OpenGL renders pixels in the cropping window. In this embodiment, a size of the cropping window is the same as a size of the view port, that is, the entire view port is a cropping area, and all pixels are rendered and displayed.

DrawTexture(interpolationMainTexture, false) is used to render and draw the main image of the first frame image to FB0 based on the drawing instruction for the main image of the first frame image, and false indicates to disable a composition mode when the main image is rendered, that is, original data in FB0 is overwritten with the rendered main image.

DrawTexture(uiTexture, true) is used to draw the UI (the same as the UI of the second frame image) of the first frame image, and true indicates to enable a composition mode when the UI is rendered, that is, the UI is rendered on the main image and composited with the main image.

After the section of code is executed, the first frame image ($F_{t-1}$) is drawn in FB0.

After the drawing in FB0 is completed, the first frame image in FB0 needs to be sent for displaying. As an example, this application provides, by using an example of OpenGL code, an example of sending the first frame image for displaying. The example of the code is as follows:

eglSwapBuffers(display, drawSurface).

Double buffer rendering is used as an example. There are two buffers: a front buffer and a rear buffer. A to-be-displayed image is in the front buffer, and a to-be-rendered image is in the rear buffer. In this embodiment, the default frame buffer (FBO) is the rear buffer, and the code is used to exchange an image in the default frame buffer (FBO) to the front buffer. This image exchange process is a frame sending process.

When the image in the default frame buffer (FBO) is exchanged to the front buffer, the image in the front buffer may be displayed on a screen, so that the step of sending the first frame image for displaying is completed. Then, the second frame image may be drawn in FB0 through drawing code that is the same as that of the first frame image. Details are not described herein.

In some possible implementations, before the first frame image is drawn, a rendering pipeline may be further configured. After the second frame image is drawn, the rendering pipeline is recovered. The configuration of the rendering pipeline may include a shader, a frame buffer, a rendering resource, a pipeline status, and the like. Recovering the rendering pipeline may clear the frame buffer corresponding to the rendering pipeline, to prepare a new rendering task.

S506: Detect whether a drawing load feature meets a preset condition or detect a clear instruction for the first buffer. If it is detected that the drawing load feature meets the preset condition or the clear instruction for the first buffer is detected, perform S507. If it is not detected that the drawing load feature meets the preset condition or the clear instruction for the first buffer is not detected, continuously perform detection.

After S505 is performed, the second frame image is stored in FB0, and S507 is performed at an appropriate frame sending occasion, to send the second frame image for displaying.

In some possible implementations, the appropriate frame sending occasion may be detecting that the drawing load feature meets the preset condition.

As an example, the drawing load feature indicates a load at which the GPU draws the second frame image, and may be a quantity of invoked DrawCalls, a clock frequency of the GPU, a usage rate of a video memory (VRAM) of the GPU, power consumption of the GPU, or the like.

When the drawing load feature meets the preset condition, it indicates that a drawing load of the GPU has been improved to a specific extent, that is, the GPU runs at a relatively high frequency. In this case, sending the frame sending instruction for the second frame image can not only ensure that the second frame image can be quickly drawn, but also ensure that and the second frame image can be sent for displaying in a timely manner after the second frame image is drawn.

In some possible implementations, the drawing load feature is a quantity of rendering instructions DrawCalls executed when the second frame image is drawn in the first buffer. The detecting that the drawing load feature meets a preset condition includes: when the quantity of executed DrawCalls is greater than or equal to a first preset threshold, determining that the drawing load feature meets the preset condition.

As an example, the drawing instruction for the second frame image includes a plurality of DrawCalls pointing to the list of the elements, and the DrawCalls may be sequentially executed to obtain the second frame image. Therefore, the quantity of executed DrawCalls may be used to represent the drawing load of the GPU.

As an example, when DrawCalls are counted, a quantity of execution times of specific DrawCalls may be counted. For example, a quantity of execution times of DrawCalls that include "glDrawArrays", "glDrawElements", "glDrawElementsInstanced", and the like and that are used to indicate rendering and drawing may be counted.

In some possible implementations, the quantity of executed DrawCalls may be obtained by obtaining an activity of the GPU via a GPU performance analysis tool, and includes the quantity of DrawCalls. Alternatively, the quantity of DrawCalls may be obtained via a third-party analysis library, for example, GLIntercept or gDEBugger. Alternatively, the quantity of DrawCalls may be obtained by embedding monitoring tools such as a counter in the target program in a manner of code interpolation or code stub interpolation.

In some possible implementations, a total quantity of DrawCalls for drawing one frame image of the target program is N, and N is a positive integer. The first preset threshold is any integer between N/3 and N/2. For example, when N is 600, the first preset threshold may be any integer between 200 and 300.

That is, when 1/3 to 1/2 of the total quantity of DrawCalls in the drawing instruction are executed, it may be determined that the drawing load feature meets the preset condition.

The total quantity of DrawCalls for drawing one frame image of the target program may be obtained by performing code analysis on the target program in advance, may be obtained from a developer of the target program, or may be set based on a type of the target program and an experience value.

As an example, assuming that the total quantity of DrawCalls of the target program is 600, and the first preset threshold is 250, after the second frame image is drawn in FB0, the quantity of executed DrawCalls that include "glDrawArrays", "glDrawElements", "glDrawElementsInstanced", and the like may be obtained via the GPU performance analysis tool; and when the quantity of executed DrawCalls is greater than or equal to 250, the drawing load feature meets the preset condition.

In some other possible implementations, the appropriate frame sending occasion may alternatively be detecting the clear instruction for the first buffer (FB0).

As an example, the clearing instruction for FB0 may include a drawing instruction for covering FB0, a clearing instruction for clearing FB0, and the like. For example, the drawing instruction may include instructions such as "glBindFramebuffer", "glInvalidateFramebuffer", and "glClear" that point to FB0.

In some possible implementations, a game rendering instruction stream in the memory may be intercepted. The game rendering instruction stream includes the plurality of DrawCalls. When any one of "glBindFramebuffer", "glInvalidateFramebuffer", and "glClear" instruction appears in the intercepted DrawCall, it is determined that the clear instruction for the first buffer (FBO) is detected.

Because the second frame image is drawn in FB0, FB0 is invoked by many instructions in actual application. When the second frame image is drawn but is not sent, if FB0 is invoked by another instruction, an image in FB0 is cleared or overwritten.

Therefore, when an instruction for clearing FB0 is detected, a frame sending instruction for the second frame image needs to be sent, to ensure that the second frame image is not overwritten, contaminated, or cleared.

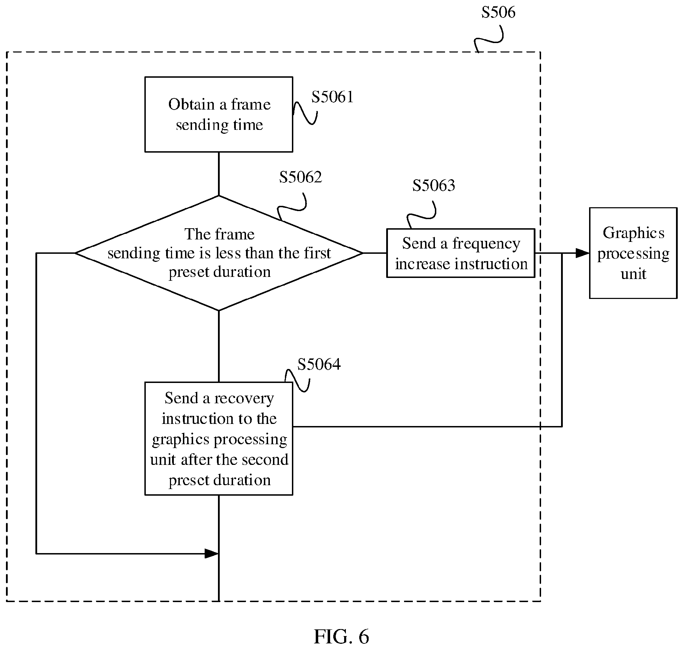

FIG. 6 is a schematic flowchart of an implementation of a step S506 in a frame sending method according to an embodiment of this application.

In some possible implementations, referring to FIG. 5A, FIG. 5B, and FIG. 6, when the clear instruction for the first buffer is detected, the frame sending method further includes the following steps.

S5061: Obtain a frame sending time.

In some possible implementations, the frame sending time is duration between a time point at which the first frame image is sent for displaying and a time point at which the clear instruction for the first buffer is detected.

As an example, to obtain the frame sending time, a timestamp at which each instruction is executed may be recorded. When the clear instruction for the first buffer is detected, a timestamp at which the first frame image is sent for displaying is obtained. A time difference between the timestamp of the clear instruction for the first buffer and the timestamp at which the first frame image is sent for displaying is the frame sending time.

S5062: Perform S5063 when the frame sending time is less than the first preset duration, or perform S507 when the frame sending time is not less than the first preset duration.

When the frame sending time is less than the first preset duration, it is determined that the time at which the clear instruction for the first buffer (FBO) is far less than the second preset duration.

When it is detected that the time at which the clear instruction for the first buffer (FBO) is far less than the second preset duration, if the second frame image is forcibly sent, the frequency of the GPU still cannot be increased in a timely manner, and buffer blocking occurs. The second preset duration is a time at which the second frame image is expected to be rendered in FB0 after the frequency of the GPU is increased in a timely manner.

As an example, in some possible implementations, the second preset duration may be determined based on a target frame rate M at which the target program is displayed on the screen, where M is a positive integer. For example, the second preset duration T (in seconds) may be calculated through the following formula:

$$T = \frac{1}{2M}$$

As an example, the target frame rate M may be 90 frames per second (Frames Per Second, FPS). The second preset duration T is 1/180 seconds, which is about 5.6 milliseconds.

In some possible implementations, the first preset duration may be one third of the second preset duration. For example, when the second preset duration is 1/180 seconds, the first preset duration may be 1/540 seconds, which is about 1.85 milliseconds.

S5063: Send a frequency increase instruction to a graphics processing unit.

In some possible implementations, the frequency increase instruction is used to indicate the graphics processing unit to increase an operating frequency from an original frequency to a target frequency.

When the frame sending time is less than the first preset duration, if the second frame image is forcibly sent, the frequency of the GPU still cannot be increased in a timely manner, and buffer blocking occurs. To resolve this problem, the frequency increase instruction may be actively sent to the GPU, to increase the operating frequency of the GPU from the original frequency to the target frequency, thereby reducing the time at which the second frame image is rendered by the GPU, and resolving the buffer blocking problem.

As an example, to ensure endurance and reduce power consumption when the GPU is idle, the original frequency of the GPU may be 220 MHz. When the frame sending time is less than the first preset duration, the GPU cannot respond and increase the frequency in a timely manner, and may run at a frequency of 220 MHz. In this case, a smart frame sending module may send the frequency increase instruction to the GPU via cross-thread communication, to indicate the GPU to increase the frequency to 1000 MHz (the target frequency) for running. In this case, the GPU may render the second frame image at a relatively fast speed, to reduce the time at which the second frame image is rendered by the GPU. In addition, the second frame image is immediately sent for displaying after the second frame image is rendered.

S5064: Send a recovery instruction to the graphics processing unit after the second preset duration.

In some possible implementations, the recovery instruction is used to indicate the graphics processing unit to recover the operating frequency from the target frequency to the original frequency.

For example, the GPU continuously works at a target frequency indicated by the frequency increase instruction after receiving the frequency increase instruction. As a result, power consumption of the GPU is increased, and endurance is affected. Therefore, after the second preset duration, the smart frame sending module may send the recovery instruction to the GPU via the cross-thread communication, to indicate the GPU to increase the frequency based on a scheduling policy, that is, recover the frequency from 1000 MHz (the target frequency) to the original frequency (220 MHz), and then automatically increase or decrease the frequency based on a load.

S507: Send the second frame image for displaying.

In some possible implementations, a manner of sending the second frame image for displaying is the same as the manner of sending the first frame image for displaying, and details are not described here.

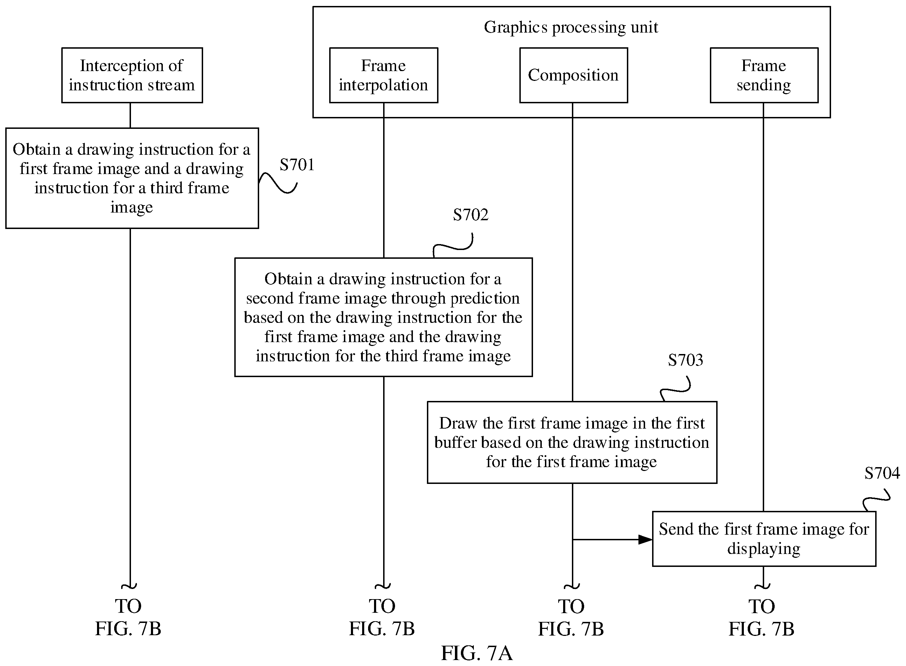

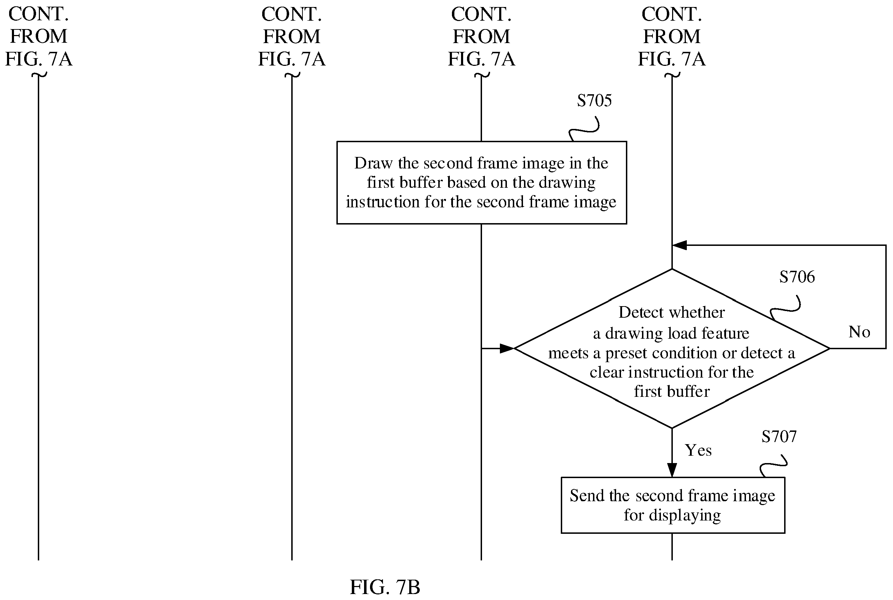

FIG. 7A and FIG. 7B are a schematic flowchart of another frame sending method according to an embodiment of this application.

In some possible implementations, referring to FIG. 7A and FIG. 7B, an example in which the frame interpolation manner is extraframe extrapolation is used, a first frame image is an actual frame of a target program, a second frame image is a prediction frame, and a frame sending method includes the following steps.

S701: Obtain a drawing instruction for a first frame image and a drawing instruction for a third frame image.

In some possible implementations, an implementation of S701 is the same as that of S501, and details are not described here.

S702: Obtain a drawing instruction for a second frame image through prediction based on the drawing instruction for the first frame image and the drawing instruction for the third frame image.

In some possible implementations, during interframe interpolation, the second frame image is an extrapolation frame of the first frame image and the third frame image, that is, a next frame of the first frame image is predicted. A drawing instruction for a main image of the second frame image is predicted by separately inputting the main image of the first frame image and the main image of the third frame image into a pre-trained extraframe extrapolation algorithm based on a long short-term memory network. The drawing instruction for the main image of the second frame image may be stored in a second frame buffer.

In some possible implementations, because a UI generally does not change during frame interpolation, a drawing instruction for a UI of the first frame image may be used as a drawing instruction for a UI of the second frame image. Therefore, the drawing instruction for the second frame image includes a drawing instruction for the main image of the second frame image in the second frame buffer and a drawing instruction for the UI of the first frame image in the third frame buffer.

S703: Draw the first frame image in the first buffer based on the drawing instruction for the first frame image.

S704: Send the first frame image for displaying.

S705: Draw the second frame image in the first buffer based on the drawing instruction for the second frame image.

S706: Detect whether a drawing load feature meets a preset condition or detect a clear instruction for the first buffer. If it is detected that the drawing load feature meets the preset condition or the clear instruction for the first buffer is detected, perform S507. If it is not detected that the drawing load feature meets the preset condition or the clear instruction for the first buffer is not detected, continuously perform detection.

S707: Send the second frame image for displaying.

In some possible implementations, an implementation of S703 to S707 is the same as that of S503 to S507, and details are not described here.

It should be understood that, the foregoing examples are provided to help a person skilled in the art understand embodiments of this application, but are not intended to limit embodiments of this application to specific numerical values or specific scenarios illustrated.

Obviously, a person skilled in the art may make various equivalent modifications or variations according to the given example. The modifications or variations also fall within the scope of embodiments of this application.

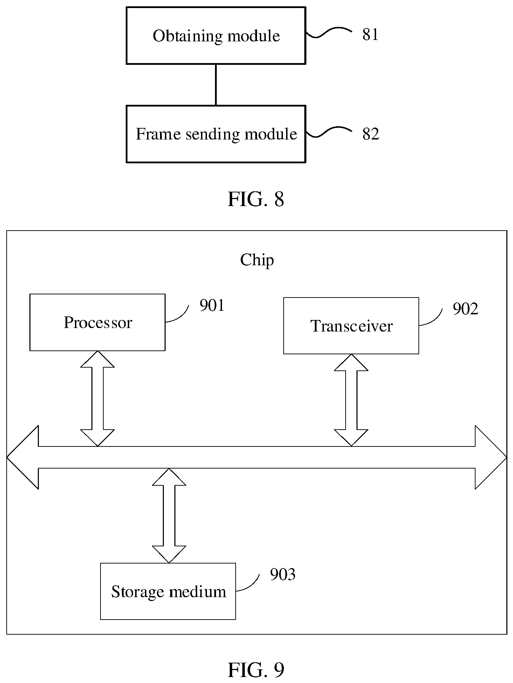

Corresponding to the frame sending method described in the above embodiment, FIG. 8 is a block diagram of a structure of a frame sending apparatus according to an embodiment of this application, and only parts related to this embodiment of this application are shown for convenience of description.

Refer to FIG. 8. A frame sending apparatus is applied to an electronic device. The electronic device runs a target program, and the apparatus includes:

an obtaining module 81, configured to obtain a drawing instruction for a first frame image and a drawing instruction for a second frame image, where one frame of the first frame image and the second frame image is an actual frame of the target program, the other frame of the first frame image and the second frame image is a prediction frame, and the prediction frame is obtained through prediction based on the actual frame and a frame preceding the actual frame; and

a frame sending module 82, configured to: draw the first frame image in a first buffer based on the drawing instruction for the first frame image, and send the frame for displaying.

The frame sending module 82 is further configured to: draw the second frame image in the first buffer based on the drawing instruction for the second frame image; and when it is detected that a drawing load feature meets a preset condition or a clear instruction for the first buffer is detected, send the second frame image for displaying.

In some possible implementations, the drawing load feature is a quantity of rendering instructions DrawCalls executed when the second frame image is drawn in the first buffer.

The frame sending module 82 is further configured to: when the quantity of executed DrawCalls is greater than or equal to a first preset threshold, determining that the drawing load feature meets the preset condition.

In some possible implementations, a total quantity of DrawCalls for drawing one frame image of the target program is N, and N is a positive integer. The first preset threshold is any integer between N/3 and N/2.

In some possible implementations, the frame sending module 82 is further configured to obtain a frame sending time, where the frame sending time is duration between a time point at which the first frame image is sent for displaying and a time point at which the clear instruction for the first buffer is detected; and when the frame sending time is less than first preset duration, send a frequency increase instruction to a graphics processing unit, where the frequency increase instruction is used to indicate the graphics processing unit to increase an operating frequency from an original frequency to a target frequency.

In some possible implementations, the frame sending module 82 is further configured to: send a recovery instruction to the graphics processing unit after second preset duration, where the recovery instruction is used to indicate the graphics processing unit to recover the operating frequency from the target frequency to the original frequency.

In some possible implementations, a target frame rate of the target program is M, and M is a positive number. The second preset duration is 1/2M seconds.

In some possible implementations, the first preset duration is one-third of the second preset duration.

It should be understood that the hardware system and the chip in embodiments of this application may perform the various frame sending methods in the foregoing embodiments of this application, that is, for specific work processes of the following various products, refer to the corresponding processes in the foregoing method embodiments.

An embodiment of this application further provides another electronic device, including a processor and a memory.

The memory is configured to store a computer program executable on the processor.

The processor is configured to perform the processing steps in the frame sending method.

An embodiment of this application further provides a computer-readable storage medium. The computer-readable storage medium stores computer instructions, and when the computer-readable storage medium is run on an electronic device, the electronic device is enabled to perform the method described above.

The computer instructions may be stored in a computer-readable storage medium or transmitted from one computer-readable storage medium to another computer-readable storage medium. For example, the computer instructions may be transmitted from one website, computer, server or data center to another website, computer, server or data center in a wired (for example, a coaxial cable, an optical fiber or a digital subscriber line (digital subscriber line, DSL)) or wireless (for example, infrared, wireless or microwave) manner.

The computer-readable storage medium may be any usable medium accessible by the computer, or a data storage device, for example, a server or a data center, integrating one or more usable media.

The usable medium may be a magnetic medium (such as a floppy disk, a hard disk, or a magnetic tape), an optical medium, a semiconductor medium (such as a solid state disk (solid state disk, SSD)), or the like.

An embodiment of this application further provides a computer program product including computer instructions. When the computer program product is run on an electronic device, the electronic device is enabled to perform the foregoing technical solutions.

FIG. 9 is a schematic diagram of a structure of a chip according to an embodiment of this application. The chip shown in FIG. 9 may be a general-purpose processor or may be a dedicated processor. The chip includes a processor 901. The processor 901 is configured to support an electronic device to perform the foregoing technical solutions.

Optionally, the chip further includes a transceiver 902, where the transceiver 902 is configured to receive control of the processor 901, and is configured to support a communication apparatus to perform the foregoing technical solutions.

Optionally, the chip shown in FIG. 9 may further include: a storage medium 903.

It should be noted that the chip shown in FIG. 9 may be implemented by using the following circuit or component: one or more field-programmable gate arrays (field-programmable gate array, FPGA), programmable logic devices (programmable logic device, PLD), controllers, state machines, logic gates, discrete hardware components, any other appropriate circuits, or any combination of circuits that can perform the various functions described in this application.

The electronic device, the computer storage medium, the computer program product, and the chip provided in embodiments of this application are all configured to perform the method provided above. Therefore, for beneficial effects that can be achieved, refer to the corresponding beneficial effects of the method provided above. Details are not described herein again.

It should be understood that, the foregoing descriptions are merely intended to help a person skilled in the art better understand embodiments of this application, but are not intended to limit the scope of embodiments of this application. A person skilled in the art may obviously perform various equivalent modifications or changes based on the foregoing examples.

For example, some steps in the foregoing method embodiments may be unnecessary, some steps may be newly added, or any two or more of the plurality of embodiments may be combined. Such modifications, changes, or combined solutions also fall within the scope of embodiments of this application.

It should be further understood that the foregoing descriptions of embodiments of this application emphasize differences between embodiments. For the same or similar descriptions not mentioned, reference may be made to each other. For brevity, details are not described herein again.

It should be further understood that, sequence numbers of the foregoing processes do not indicate an execution sequence, and an execution sequence of the processes shall be determined based on functions and internal logic thereof, and shall constitute no limitation on an implementation process of embodiments of this application.

It should be further understood that, in embodiments of this application, "presetting" or "predefining" may be implemented by storing corresponding code, a table, or other related information that may be used for indication in a device (for example, including an electronic device) in advance. A specific implementation of "presetting" or "predefining" is not limited in this application.

It should be further understood that, division into the manners, cases, categories, and embodiments in embodiments of this application is merely for ease of description, and should not constitute a particular limitation. Features in the manners, categories, cases, and embodiments may be combined with each other without contradictions.

It should be further understood that, in embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

Finally, it should be noted that, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. A frame sending method, applied to an electronic device, wherein the electronic device runs a target program, and the method comprises:

   obtaining a drawing instruction for a first frame image and a drawing instruction for a second frame image, wherein one frame of the first frame image and the second frame image is an actual frame of the target program, the other frame of the first frame image and the second frame image is a prediction frame, and the prediction frame is obtained through prediction based on the actual frame and a frame preceding the actual frame;
   drawing the first frame image in a first buffer based on the drawing instruction for the first frame image, and sending the first frame image for displaying;
   drawing the second frame image in the first buffer based on the drawing instruction for the second frame image; and
   when detecting that a drawing load feature meets a preset condition or detecting a clear instruction for the first buffer, sending a frame sending instruction for the second frame image.

2. The method according to claim 1, wherein the drawing load feature is a quantity of rendering instructions DrawCalls executed when the second frame image is drawn in the first buffer; and
   the detecting that the drawing load feature meets a preset condition comprises:
   when the quantity of executed DrawCalls is greater than or equal to a first preset threshold, determining that the drawing load feature meets the preset condition.

3. The method according to claim 2, wherein a total quantity of DrawCalls for drawing one frame image of the target program is N, and N is a positive integer; and
   the first preset threshold is any integer between N/3 and N/2.

4. The method according to claim 1, wherein when the clear instruction for the first buffer is detected, the method further comprises:

   obtaining a frame sending time, wherein the frame sending time is duration between a time point at which the first frame image is sent for displaying and a time point at which the clear instruction for the first buffer is detected; and
   when the frame sending time is less than first preset duration, sending a frequency increase instruction to a graphics processing unit, wherein the frequency increase instruction is used to indicate the graphics processing unit to increase an operating frequency from an original frequency to a target frequency.

5. The method according to claim 4, wherein the method further comprises:
   sending a recovery instruction to the graphics processing unit after second preset duration, wherein the recovery instruction is used to indicate the graphics processing unit to recover the operating frequency from the target frequency to the original frequency.

6. The method according to claim 5, wherein a target frame rate of the target program is M, and M is a positive number; and
   the second preset duration is 1/2M seconds.

7. The method according to claim 5 or 6, wherein the first preset duration is one-third of the second preset duration.

**8.** A frame sending apparatus, applied to an electronic device, wherein the electronic device runs a target program, and the apparatus comprises:

an obtaining module, configured to obtain a drawing instruction for a first frame image and a drawing instruction for a second frame image, wherein one frame of the first frame image and the second frame image is an actual frame of the target program, the other frame of the first frame image and the second frame image is a prediction frame, and the prediction frame is obtained through prediction based on the actual frame and a frame preceding the actual frame; and a frame sending module, configured to: draw the first frame image in a first buffer based on the drawing instruction for the first frame image, and send the frame for displaying, wherein the frame sending module is further configured to: draw the second frame image in the first buffer based on the drawing instruction for the second frame image; and when it is detected that a drawing load feature meets a preset condition or a clear instruction for the first buffer is detected, send the second frame image for displaying.

**9.** An electronic device, comprising a memory, a processor, and a computer program that is stored in the memory and that is capable of running on the processor, and when the processor executes the computer program, the method according to any one of claims 1 to 7 is implemented.

**10.** A computer-readable storage medium, wherein the computer-readable storage medium stores a computer program, the computer program comprises program instructions, and when the program instructions are executed by a processor, the processor is enabled to perform the image processing method according to any one of claims 1 to 7.

FIG. 1

Electronic device 100

Antenna 1    Antenna 2

| Mobile communication module 2G/3G/4G/5G [150] | Wireless communication module BT/WLAN/GNSS/NFC/IR/FM [160] |

Loudspeaker [170A]

Telephone receiver [170B]

Microphone [170C]

Headset jack [170D]

Audio module [170]

Displays 1–N [194]

Cameras 1–N [193]

Indicator [192]

Motor [191]

Button [190]

Internal memory [121]

SIM card interfaces 1–N [195]

External memory interface [120]

USB interfaces [130]

Charging input

Charge management module [140]

Power supply management module [141]

Battery [142]

Processor [110]

Sensor module [180]

Pressure sensor [180A]

Gyroscope sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

FIG. 2

| Application layer | Camera | Calendar | Map | WLAN | Music | Messaging |
| | Gallery | Phone | Navigation | Bluetooth | Video | ... |

| Application framework layer | Window manager | Content provider | Phone manager | Resource manager |
| | Notification manager | View system | ... | |

| System library | Surface manager | 3D graphics processing library | Android runtime |
| | Two-dimensional graphics engine | Media library | ... | |

| Kernel layer | Display driver | Camera driver | |
| | Audio driver | Sensor driver | ... |

FIG. 3

Interception of instruction stream

Graphics processing unit

Frame interpolation

Composition

Display

Frame sending

FIG. 4

EP 4 751 787 A1

| Graphics processing unit | | |
|---|---|---|

| Interception of instruction stream | | Frame interpolation | Composition | Frame sending |

Obtain a drawing instruction for a second frame image and a drawing instruction for a third frame image  S501

Obtain a drawing instruction for a first frame image through prediction based on the drawing instruction for the second frame image and the drawing instruction for the third frame image  S502

Draw the first frame image in the first buffer based on the drawing instruction for the first frame image  S503

Send the first frame image for displaying  S504

TO FIG. 5B

TO FIG. 5B

TO FIG. 5B

TO FIG. 5B

FIG. 5A

CONT.
FROM
FIG. 5A

CONT.
FROM
FIG. 5A

CONT.
FROM
FIG. 5A

CONT.
FROM
FIG. 5A

S505

Draw the second frame image in the
first buffer based on the drawing
instruction for the second frame image

S506

Detect whether
a drawing load feature
meets a preset condition or detect a
clear instruction for the
first buffer

No

Yes

S507

Send the second frame image
for displaying

FIG. 5B

EP 4 751 787 A1

S506

Obtain a frame sending time — S5061

The frame sending time is less than the first preset duration — S5062

Send a frequency increase instruction — S5063

Graphics processing unit

Send a recovery instruction to the graphics processing unit after the second preset duration — S5064

FIG. 6

Graphics processing unit

Frame interpolation

Composition

Frame sending

Interception of instruction stream

S701 — Obtain a drawing instruction for a first frame image and a drawing instruction for a third frame image

S702 — Obtain a drawing instruction for a second frame image through prediction based on the drawing instruction for the first frame image and the drawing instruction for the third frame image

S703 — Draw the first frame image in the first buffer based on the drawing instruction for the first frame image

S704 — Send the first frame image for displaying

TO FIG. 7B

TO FIG. 7B

TO FIG. 7B

TO FIG. 7B

FIG. 7A

CONT.
FROM
FIG. 7A

CONT.
FROM
FIG. 7A

CONT.
FROM
FIG. 7A

CONT.
FROM
FIG. 7A

S705

Draw the second frame image in the
first buffer based on the drawing
instruction for the second frame image

S706

Detect whether
a drawing load feature
meets a preset condition or detect a
clear instruction for the
first buffer

No

Yes

S707

Send the second frame image
for displaying

FIG. 7B

| Obtaining module | 81 |
|---|---|

| Frame sending module | 82 |
|---|---|

FIG. 8

Chip

| Processor | 901 |
|---|---|

| Transceiver | 902 |
|---|---|

| Storage medium | 903 |
|---|---|

FIG. 9

## INTERNATIONAL SEARCH REPORT

| International application No. |
| --- |
| **PCT/CN2025/071560** |

**A. CLASSIFICATION OF SUBJECT MATTER**

A63F13/52(2014.01)i

According to International Patent Classification (IPC) or to both national classification and IPC

**B. FIELDS SEARCHED**

Minimum documentation searched (classification system followed by classification symbols)

IPC: A63F13, G06T, G06F, H04N

Documentation searched other than minimum documentation to the extent that such documents are included in the fields searched

Electronic data base consulted during the international search (name of data base and, where practicable, search terms used)

CNTXT, ENTXTC, VEN, CJFD: first, second, frame, predicted, real, cache, 第一帧, 第二帧, 预测帧, 真实帧, 缓存

**C. DOCUMENTS CONSIDERED TO BE RELEVANT**

| Category* | Citation of document, with indication, where appropriate, of the relevant passages | Relevant to claim No. |
| --- | --- | --- |
| A | CN 114470750 A (HONOR DEVICE CO., LTD.) 13 May 2022 (2022-05-13) description, summary of the invention, and figures 1-12 | 1-10 |
| A | CN 112789651 A (HUAWEI TECHNOLOGIES CO., LTD.) 11 May 2021 (2021-05-11) entire document | 1-10 |
| A | CN 113797530 A (HONOR DEVICE CO., LTD.) 17 December 2021 (2021-12-17) entire document | 1-10 |
| A | CN 114089933 A (HONOR DEVICE CO., LTD.) 25 February 2022 (2022-02-25) entire document | 1-10 |
| A | CN 115398907 A (HUAWEI TECHNOLOGIES CO., LTD.) 25 November 2022 (2022-11-25) entire document | 1-10 |
| A | CN 116664375 A (HONOR DEVICE CO., LTD.) 29 August 2023 (2023-08-29) entire document | 1-10 |
| A | EP 4164230 A1 (AXIS AB) 12 April 2023 (2023-04-12) entire document | 1-10 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **18 April 2025** | **24 April 2025** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2025/071560** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2022015435 A1 (TENCENT AMERICA LLC.) 20 January 2022 (2022-01-20) entire document | 1-10 |

Form PCT/ISA/210 (second sheet) (July 2022)

## INTERNATIONAL SEARCH REPORT
### Information on patent family members

International application No.

**PCT/CN2025/071560**

| Patent document cited in search report | | | Publication date (day/month/year) | Patent family member(s) | | | Publication date (day/month/year) |
|---|---|---|---|---|---|---|---|
| CN | 114470750 | A | 13 May 2022 | None | | | |
| CN | 112789651 | A | 11 May 2021 | None | | | |
| CN | 113797530 | A | 17 December 2021 | None | | | |
| CN | 114089933 | A | 25 February 2022 | None | | | |
| CN | 115398907 | A | 25 November 2022 | WO | 2022068326 | A1 | 07 April 2022 |
| CN | 116664375 | A | 29 August 2023 | None | | | |
| EP | 4164230 | A1 | 12 April 2023 | TW | 202316298 | A | 16 April 2023 |
| | | | | KR | 20230050220 | A | 14 April 2023 |
| | | | | JP | 2023056491 | A | 19 April 2023 |
| | | | | US | 2023112135 | A1 | 13 April 2023 |
| WO | 2022015435 | A1 | 20 January 2022 | US | 2022021870 | A1 | 20 January 2022 |
| | | | | US | 11689713 | B2 | 27 June 2023 |
| | | | | KR | 20220070326 | A | 30 May 2022 |
| | | | | JP | 2023502535 | A | 24 January 2023 |
| | | | | JP | 7345654 | B2 | 15 September 2023 |
| | | | | EP | 4032287 | A1 | 27 July 2022 |
| | | | | EP | 4032287 | A4 | 30 November 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410041697